# EUROPEAN PATENT SPECIFICATION

(11) **EP 3 972 856 B1**
(45) Date of publication and mention of the grant of the patent: **12.07.2023**
(21) Application number: 20726824.4
(22) Date of filing: 19.05.2020
(51) Int. Cl.: B60C 29/06, F04B 33/00, F04B 39/12

(54) **CONNECTING HEAD ADAPTED TO CONNECT A COMPRESSED AIR DISPENSING DEVICE AND AN ELEMENT IN WHICH TO INSUFFLATE SAID COMPRESSED AIR**
VERBINDUNGSKOPF ZUR VERBINDUNG EINER DRUCKLUFTAUSGABEVORRICHTUNG UND EINEM ELEMENT, IN DAS DIE DRUCKLUFT EINGEBLASEN WIRD
TETE DE LIAISON PERMETTANT UNE CONNEXION ENTRE UN DISPOSITIF DE DISTRIBUTION D'AIR COMPRIME ET UN ELEMENT DANS LEQUEL EST INSUFFLE L'AIR COMPRIME

(30) Priority: 20.05.2019 IT 201900006996
(43) Date of publication of application: 30.03.2022
(73) Proprietor: Smit Lorenzato Srl, 36034 Vicenza (IT)
(72) Inventor: LORENZATO, Saverio Giuseppe, 36034 Vicenza (IT)
(74) Representative: Bettello, Pietro
(86) International application number: PCT/EP2020/063947
(87) International publication number: WO 2020/234288

(56) References cited:
- CN-U- 201 951 185
- CN-U- 207 955 227
- GB-A- 387 441

## Description

The present invention relates to a connecting head adapted to connect a compressed air dispensing device and an element in which to insufflate the above-mentioned, according to the general part of claim 1.

As is known, there are many devices which must be inflated by compressed air. These include vehicle tires, in particular of motor vehicles, motorcycles, bicycles, etc. Inflatable mattresses, often used as elements able to float on water, both for fun and safety purposes, must also be inflated with compressed air, in order to increase their volume, so that they are able to perform their function effectively.

In particular, the elements that are to be considered herein are those, just like the above tires, which have a valve with threaded end. Once the inflation operation of the element to which the valve is fastened is completed, the closure thereof is made by means of a plug, a cap or the like, adapted to be screwed to said threaded end so as to reduce, as far as possible, the leakage of compressed air from the previously inflated element.

To allow easy inflation operations of said elements by means of compressed air, connecting heads are provided for connecting a compressed air dispensing device, generally consisting of a compressor or a tank, with the element in which to insufflate said compressed air. Said connecting heads comprise a connecting body which is adapted to be fastened to the dispensing device by means of a flexible duct. Said duct is fastened to the body by means of a tubular element, provided on its surface with circular elements in relief and which is generally called barb, around which the end of the flexible duct is placed.

A duct is also present within said body and adapted to connect the flexible duct with the element within which it is necessary to insufflate compressed air; said element is in turn connected to the body by means of the valve with threaded end described above, insertable into the outlet hole of the duct. A special arm is also present, pivoted to said body at an axis perpendicular to the longitudinal axis of the body; an elastic means is also provided, acting on said arm so as to determine the mutual engagement between one portion thereof or an element connected to said arm and the threaded end of the valve. This is likely to determine the reversible fastening between the body and the valve. It is also envisaged that said fastening is separable by an action on the arm, generally exerted by the user by means of his fingers, overcoming the action of said elastic means.

In some devices of the known type, it is however necessary to act continuously on an arm acting on said elastic means to allow the insertion of the valve with threaded end into the outlet hole of the duct. This is often not easy, and also requires a certain difficulty to determine the exact insertion of the valve. Furthermore, sometimes in the devices of the known type, the fastening of the valve is not particularly safe, meaning that, even without acting on the element which in turn acts on the elastic means, it is possible to determine the mutual release between valve and body, effectively interrupting this insufflation of compressed air.

In the documents CN 201951185 U, CN 207955227 U and GB 387441 A connecting heads between a compressed air dispensing device and an element in which to insufflate the above-mentioned, which however require the activation of particular elements to allow the connection between the head and the element in which to insufflate the air, are described.

The object of the present invention is to provide a connecting head of the type described above that can be easily connected to the element in which to insufflate the air in a so-called "automatic" way, without carrying out any specific activation manoeuvre on members present in the aforesaid head.

The object of the present invention is to provide a connecting head adapted to connect the compressed air dispensing device and the element in which to insufflate the above-mentioned, which is free from said drawbacks and is more practical, safe and intrinsically easier to be performed than the similar devices of the known type.

This is achieved, according to the invention, by conforming the connecting head according to the characteristics of the characterizing part of claim 1.

Other characteristics of the invention are described in the dependent claims.

The present invention will be described in detail below, in some particular embodiments thereof, made only by way of non-limiting example, with the help of the accompanying drawing tables, in which;
- fig. 1 illustrates a perspective view of the assembly consisting of the connecting head according to the invention and a valve with threaded end insertable in the aforementioned;
- fig. 2 illustrates a longitudinal section view of said assembly, according to the line II-II of fig. 3;
- fig. 3 illustrates a top plan view of said assembly;
- figs. 4 and 5 show two views, respectively, in plan from above and in longitudinal section according to the line V-V of fig. 4, of said assembly, with the valve in the insertion phase;
- figs. 6 and 7 show the same views corresponding to those of figs. 4 e 5, wherein the valve is completely coupled to the head;
- fig. 8 shows a partial section view of the elements that determine said coupling, made according to the line VIII-VIII of fig. 6;

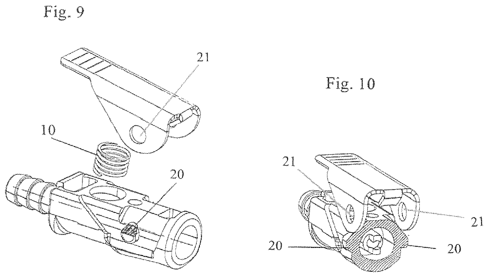

- fig. 9 illustrates an exploded view of the connecting head;
- fig. 10 shows an exploded view of said head as well, partially sectioned with a plane transverse with respect to its longitudinal axis.

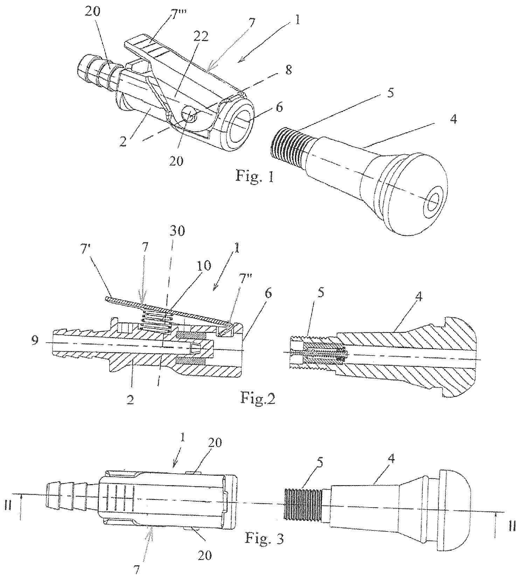

As visible in particular from figures 1, 2 and 3, the connecting head 1 according to the invention comprises a connecting body 2 adapted to be fastened to the compressed air dispensing device, consisting mainly of a compressor or a special tank by means of a flexible duct, not shown in the figures.

With known methods, the fastening between the flexible duct and the body 2 is made by means of a tubular element , shaped like a barb, as previously stated.

Observing the figures 1 and 2, it can be seen that within the connecting body 2, a duct 3 is present and adapted to connect the flexible duct with the element within which it is intended to insufflate the compressed air. In particular, this duct 3 leads outwards with an outlet hole 6, inside which a threaded end 5 of a valve 4 that is present in the element inside which to insufflate can be inserted. It should be noted that the valve 4 is illustrated only by way of example and may also take on forms and aspects that are considerably different from those shown in the figures. What is important is that it has indeed a threaded end 5 adapted to be inserted in the duct 3.

An arm 7 is pivoted to the connecting body 2 at a pivoting axis 8 of the arm 7 perpendicular to the axis 9 of the body, on which arm an elastic means 10 (see fig 2) acts, in this case constituted by a helical spring. Said spring acts in the direction of tending to bring the arm 7 into the sloped position shown in figures 1 and 2 with respect to the longitudinal axis 2. Vice versa, the user can, generally with the use of his fingers, push a second portion 7' placed before the pivoting axis 8 of the arm 7 (fig. 1), overcoming the action of the elastic means 10, causing the arm 7 to be arranged substantially parallel to the axis 9 of the body 2.

As can be seen in particular in figure 2, at the end of the arm 7 that is the closest to the body 2, a first portion 7" is provided and folded with respect to the remaining part of the aforesaid arm.

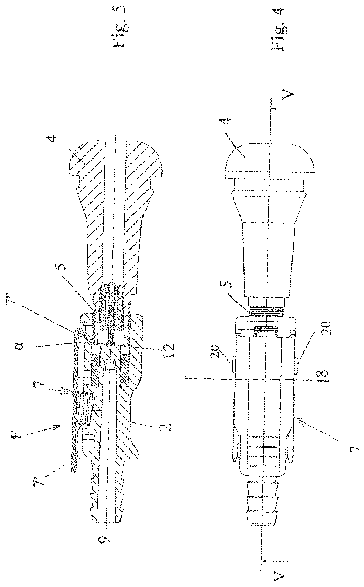

From the operational point of view, as can be seen in figures 4 and 5, when the threaded end 5 starts being inserted into the valve 4 within the body 2, the mutual engagement between the first portion 7" and said threaded end 5 is determined.

The operation is made possible by a force action exerted with the direction of the force F, indicated in the figure, on the second portion 7' of the arm 7 placed before the pivoting axis 8, overcoming the action of the spring 10, so as to arrange the arm 7 substantially parallel to the axis 9 of the body 2, in such a way that the first portion 7" does not interfere with the thread 5 during said insertion phase.

Vice versa, as visible in figures from 6 to 8, once the valve 4 has been completely inserted into the body 2 and the arm 7 is released, which is therefore subject to the action of the spring 10 only, the mutual engagement between said first portion 7" and the toothing of the threaded end 5 is determined, which causes the mutual coupling between valve 4 and body 2.

Obviously, the type of material, the shape and the dimensions of the components of the punched sheet can be the most varied, according to the design requirements of the box, without thereby departing from the scope of the claims defined below.

From a constructive point of view, the body of the head will advantageously be made of zamak.

Also advantageously, to determine the pivoting of the arm 7 to said body 2, two side protrusions 20 are provided on said body, arranged aligned along the transverse pivoting axis 8. Said protrusions are adapted to be inserted into special holes 21 formed on the side extensions 22 of the arm 7, thus determining the pivoting of the arm 7 to the body 2. In this way it is possible to eliminate the presence of a special pin passing inside the body, as well as the pivoting by riveting to ensure this pivoting, to the benefit of the overall cheapness of the realisation.

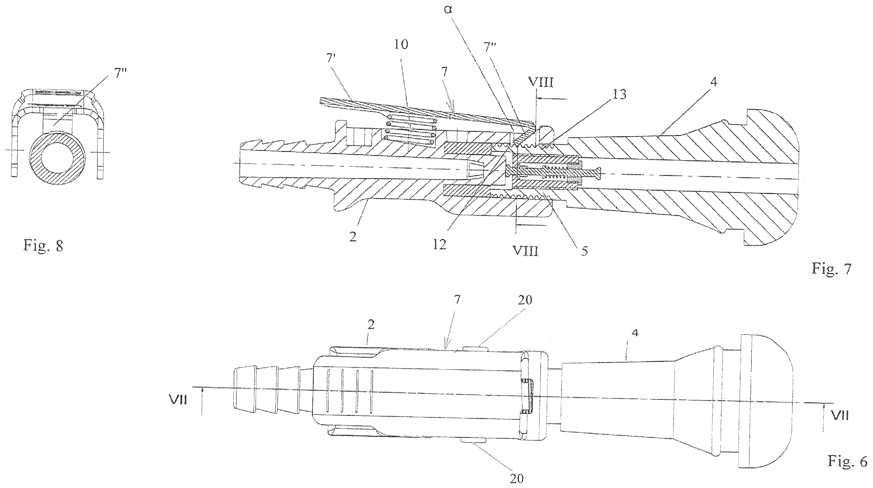

Furthermore, from the figures it can be seen that the arm 7 has an elongated shape. In particular, the second portion 7' of the arm 7 has a plurality of teeth 7‴ on its surface, to facilitate the grip between the user's fingers and said arm. Furthermore, as visible in particular in figures 2, 5 and 7, the helical spring 10 is partially arranged within a hole which has an axis 30 not perpendicular to the longitudinal axis 9 of the body 2, this inclination being such as to cause that this axis is perpendicular to the surface of the arm 7 in the rest position (see in particular figure 7).

In this way the spring 10 can exert its action optimally on the arm 7, without determining inappropriate twists on the aforesaid one.

As can be seen in particular in figures 5 and 7, the first portion 7" of the arm 7 is sloped with respect to the remaining part of the aforesaid arm so that it is arranged substantially perpendicular to the side 12 of the thread. In this way, an effective mutual engagement is obtained between said portion and the threaded end 5, ultimately determining the mutual locking between valve 4 and body 2, which is exactly what is wished. Reiterating that the perpendicularity between the first portion 7" and the side 12 of the thread is the optimal solution, it should be specified, however, that other inclinations between said two elements also fall within the scope of the present patent.

From the operational point of view, we have seen that, by acting on the arm 7 as visible in particular in figure 5, any interference between the first portion 7" and the threaded end 5 is avoided.

It should also be considered that, by inclining the second portion 7' in such a way that it forms an acute angle α (fig. 7) with respect to the remaining portion of the arm 7, it is ensured that it is possible to insert the valve 4 without any problem within the body 2 up to the desired level, even without pressing the arm 7; vice versa it is evident that once the arm 7 is released (see figure 7) the mutual engagement between the first portion 7" and the side 12 of the thread of the threaded end 13 of the valve takes place, thereby determining the mutual engagement between body 2 and valve 4. From the foregoing, therefore, it can be seen how the device according to the invention allows an easy mutual connection operation between the connecting body of the connecting head with the valve 4 present in the element in which to insufflate the compressed air, while ensuring absolute safety of said connection during the operational phase.

## Claims

1. Connecting head adapted to connect a compressed air dispensing device and an element in which to insufflate said compressed air, said connecting head comprising a connecting body (2) adapted to be fastened to the dispensing device by means of a flexible duct, a duct (3) being present within said body, and adapted to connect the flexible duct and the element within which to insufflate, which is connectable to the body by means of a valve (4) with threaded end (5) that is insertable into an outlet hole (6) of the duct (3), an arm (7) being also present, pivoted to the body (2) at a pivoting axis (8) of the arm (7) perpendicular to the longitudinal axis (9) of the body, an elastic means (10) being also provided, acting on said arm (7) in order to determine the mutual engagement between one portion thereof or an element connected to said arm (7), and the threaded end (5) of the valve (4), this determining the reversible interlock fastening between the body (2) and valve (4), said fastening being separable by an action on the arm (7), overcoming the action of the elastic means (10), wherein said arm (7) presents a first portion (7") adapted to be in contact, in the position of rest, with the side (12) of the thread of the threaded end (5) of the valve (4), thereby determining the reversible engagement of the connecting body (2) with said valve (4),
**said head being characterised in that**
the first portion (7") is sloped with respect to a second portion (7') of the arm (7) placed before the pivoting axis (8) of the arm (7), in order to form an acute angle (α) with said second portion (7').

2. HEAD, according to claim 2, **characterised in that** the first portion (7") of the arm (7) is sloped in order to arrange itself substantially perpendicular to the side (12) of the thread of the threaded end (13), when the arm (7) is subject only to the action of the elastic means (10).

3. HEAD, according to one or more of the preceding claims, **characterised in that** the elastic means (10) consists of a helical spring, located in a hole, formed in the connecting body (2), said hole having an axis not perpendicular to the longitudinal axis (9) of said body (2).

4. HEAD, according to one or more of the preceding claims, **characterised in that** it is made of a zamak single body.

5. HEAD, according to one or more of the preceding claims, **characterised in that** for the mutual pivoting between the arm (7) and body (2), two protrusions (20) are provided on said body, mutually aligned along an axis perpendicular to the longitudinal axis (9) of the body (2), said protrusions being insertable into holes (21) formed on side extensions (22) of the arm (7).

## Patentansprüche

1. Verbindungskopf zum Verbinden einer Druckluftzufuhrvorrichtung und eines Elements, in das die Druckluft eingeblasen werden soll, wobei der Verbindungskopf einen Verbindungskörper (2) aufweist, der mittels einer flexiblen Leitung an der Zufuhrvorrichtung befestigt werden kann, eine Leitung (3), die in dem Körper vorhanden ist und die flexible Leitung und das Element, in das die Luft eingeblasen werden soll, verbinden kann und die mit dem Körper über ein Ventil (4) mit Gewindeende (5) verbunden werden kann, das in ein Auslassloch (6) der Leitung (3) eingeführt werden kann, wobei auch ein Arm (7) vorhanden ist, ein Arm (7) ist ebenfalls vorhanden, der an einer Schwenkachse (8) des Arms (7), die senkrecht zur Längsachse (9) des Körpers verläuft, am Körper (2) schwenkbar gelagert ist, ein elastisches Mittel (10) ist ebenfalls vorhanden, das auf den Arm (7) einwirkt, um den gegenseitigen Eingriff zwischen einem Teil davon oder einem mit dem Arm (7) verbundenen Element zu bestimmen, und dem Gewindeende (5) des Ventils (4) zu bestimmen, wodurch die reversible Verriegelung zwischen dem Körper (2) und dem Ventil (4) bestimmt wird, wobei die Befestigung durch eine Einwirkung auf den Arm (7) lösbar ist, die die Wirkung des elastischen Mittels (10) überwindet, wobei der Arm (7) eine ersten Anteil (7") aufweist, der geeignet ist, in der Ruhestellung mit der Seite (12) des Gewindes des mit einem Gewinde versehenen Endes (5) des Ventils (4) in Kontakt zu sein, wodurch der reversible Eingriff des Verbindungskörpers (2) mit dem Ventil (4) bestimmt wird,
**dieser Kopf ist dadurch gekennzeichnet, dass**
der erste Abschnitt (7") in Bezug auf einen zweiten Abschnitt (7') des Arms (7), der vor der Schwenkachse (8) des Arms (7) angeordnet ist, geneigt ist, um einen spitzen Winkel (α) mit dem zweiten Abschnitt (7') zu bilden.

2. KOPF nach Anspruch 2, **dadurch gekennzeichnet, dass** der erste Teil (7") des Arms (7) geneigt ist, um sich im Wesentlichen senkrecht zur Seite (12) des Gewindes des Gewindeendes (13) anzuordnen, wenn der Arm (7) nur der Wirkung des elastischen Mittels (10) ausgesetzt ist.

3. KOPF nach einem oder mehreren der vorhergehenden Ansprüche, **dadurch gekennzeichnet, dass** das elastische Mittel (10) aus einer Schraubenfeder besteht, die sich in einem Loch befindet, das in dem Verbindungskörper (2) ausgebildet ist, wobei das Loch eine Achse hat, die nicht senkrecht zu der Längsachse (9) des Körpers (2) verläuft.

4. KOPF nach einem oder mehreren der vorhergehenden Ansprüche, **dadurch gekennzeichnet, dass** er aus einem einzigen Zamak-Körper hergestellt ist.

5. KOPF nach einem oder mehreren der vorhergehenden Ansprüche, **dadurch gekennzeichnet, dass** für das gegenseitige Schwenken zwischen dem Arm (7) und dem Körper (2) zwei Vorsprünge (20) an dem Körper vorgesehen sind, die entlang einer Achse senkrecht zur Längsachse (9) des Körpers (2) zueinander ausgerichtet sind, wobei die Vorsprünge in Löcher (21) einführbar sind, die an seitlichen Verlängerungen (22) des Arms (7) ausgebildet sind.

## Revendications

1. Tête de raccordement conçue pour raccorder un dispositif de distribution d'air comprimé et un élément dans lequel insuffler ledit air comprimé, ladite tête de raccordement comprenant un corps de raccordement (2) conçu pour être fixé au dispositif de distribution au moyen d'un conduit flexible, un conduit (3) étant présent au sein dudit corps, et conçu pour raccorder le conduit flexible et l'élément au sein duquel insuffler, qui est apte à être raccordé au corps au moyen d'une valve (4) dotée d'une extrémité filetée (5) qui est apte à être insérée dans un trou de sortie (6) du conduit (3), un bras (7) étant également présent, pivoté par rapport au corps (2) au niveau d'un axe de pivotement (8) du bras (7) perpendiculaire à l'axe longitudinal (9) du corps, un moyen élastique (10) étant également ménagé, agissant sur ledit bras (7) afin de déterminer la mise en prise mutuelle entre une partie de celui-ci ou un élément raccordé audit bras (7), et l'extrémité filetée (5) de la valve (4), ceci déterminant la fixation d'emboîtement réversible entre le corps (2) et la valve (4), ladite fixation étant séparable par une action sur le bras (7), surpassant l'action du moyen élastique (10), dans laquelle ledit bras (7) présente une première partie (7") conçue pour être en contact, dans la position de repos, avec le côté (12) du filetage de l'extrémité filetée (5) de la valve (4), ce qui détermine la mise en prise réversible du corps de raccordement (2) avec ladite valve (4),
**ladite tête étant caractérisée en ce que**
la première partie (7") est inclinée par rapport à une seconde partie (7') du bras (7) placée avant l'axe de pivotement (8) du bras (7), afin de former un angle aigu (α) avec ladite seconde partie (7').

2. TÊTE, selon la revendication 2, **caractérisée en ce que** la première partie (7") du bras (7) est inclinée afin de s'agencer elle-même de manière sensiblement perpendiculaire au côté (12) du filetage de l'extrémité filetée (13), lorsque le bras (7) est soumis uniquement à l'action du moyen élastique (10).

3. TÊTE, selon l'une ou plusieurs des revendications précédentes, **caractérisée en ce que** le moyen élastique (10) est constitué d'un ressort hélicoïdal, situé dans un trou, formé dans le corps de raccordement (2), ledit trou ayant un axe non perpendiculaire à l'axe longitudinal (9) dudit corps (2).

4. TÊTE, selon l'une ou plusieurs des revendications précédentes, **caractérisée en ce qu'elle** est constituée d'un corps unique en zamak.

5. TÊTE, selon l'une ou plusieurs des revendications précédentes, **caractérisée en ce que** pour le pivotement mutuel entre le bras (7) et le corps (2), deux saillies (20) sont ménagées sur ledit corps, mutuellement alignées le long d'un axe perpendiculaire à l'axe longitudinal (9) du corps (2), lesdites saillies étant aptes à être insérées dans des trous (21) formés sur des extensions latérales (22) du bras (7).
